# DEMANDE DE BREVET EUROPEEN

(11) **EP 2 642 694 A1**
(43) Date de publication de la demande: **25.09.2013**
(21) Numéro de dépôt: 13160171.8
(22) Date de dépôt: 20.03.2013
(51) Int. Cl.: H04L 12/24, H04Q 11/00

(54) **Mise à jour logicielle des ONT's dans un réseau FTTH par un protocole TR-069**

(30) Priorité: 20.03.2012 FR 1252500
(71) Demandeur: Bouygues Telecom, 75008 Paris (FR)
(72) Inventeur: Delpy, Xavier, 91400 Saclay (FR); Toullelan, Thierry, 35520 Melesse (FR)
(74) Mandataire: Regimbeau

(57) **Abrégé**

L'invention concerne un procédé de mise à jour logicielle d'un équipement d'un réseau fibre optique jusqu'à la maison (FTTH), le réseau fibre optique jusqu'à la maison (FTTH) comprenant au moins un équipement de terminaison optique (ONT) connecté à un boitier d'accès à Internet (STB) par l'intermédiaire d'une passerelle (GTW), le réseau fibre optique jusqu'à la maison (FTTH) comprenant un serveur de configuration (ACS) adapté pour réaliser une mise à jour logicielle de la passerelle (GTW) et du boitier d'accès à Internet (STB) selon le protocole TR-069, le procédé étant caractérisé en ce que le serveur de configuration (ACS) réalise la mise à jour logicielle (100) de l'équipement de terminaison optique (ONT) selon le protocole TR-069.

## Description

### DOMAINE TECHNIQUE GENERAL

L'invention concerne la gestion des réseaux optiques passifs (en anglais, « *Passive Optical Network* », PON).

### ETAT DE LA TECHNIQUE

Un réseau du type fibre optique jusqu'à la maison (en anglais, « *Fiber To The Home* », (FTTH)) est traditionnellement composé d'un coeur en fibre optique et de liens vers des abonnés fibre optique.

Des équipements de terminaisons optiques appelés ONT (en anglais, « *Optical Network Termination* ») disposés chez l'abonné sont reliés via des fibres optiques à un équipement optique central appelé OLT (en anglais, « *Optical Line Termination* »). L'équipement central OLT est lui connecté au réseau Internet.

Un réseau FTTH comprend bien entendu plusieurs OLTs et plusieurs ONTs.

Pour accéder aux services, l'abonné dispose d'un boitier d'accès à Internet (en anglais, « *Set Top Box* », (STB)) connecté à une terminaison optique ONT via une passerelle (en anglais, « Gateway », (GTW)).

La connexion entre la passerelle GTW et l'équipement ONT n'est pas effectuée par l'intermédiaire de la fibre optique mais par un câble en cuivre (typiquement un câble Ethernet (paires torsadées) de catégorie 5E minimum avec un connecteur RJ45 à chaque extrémité).

Tous les équipements ci-dessus sont administrés à distance par l'opérateur. En particulier, les mises à jour logicielles des équipements sont effectuées à distance.

L'OLT et les ONTs sont administrés par un serveur d'administration du réseau (en anglais, « *Access Management System* », (AMS)) dédié au réseau FTTH tandis que les équipements mis à disposition de l'abonné sont administrés à distance via un serveur de configuration (en anglais, « *Auto-Configuration Server* », (ACS)) maintenu par le fournisseur de services.

Pour effectuer des mises à jour logicielles des différents équipements (ONT, STB, GTW), chaque serveur utilise un protocole de communication qui lui est propre : le serveur ACS utilise le protocole TR-069 et le serveur AMS utilise le protocole OMCI (protocole spécifié dans la recommandation G.984.4 de l'ITU (en anglais, « *International Telecommunication Union* »).

Un problème est que les deux serveurs ne communiquent pas entre eux. En outre, il s'agit de deux entités différentes qui gèrent l'ACS et l'AMS.

Ceci est problématique quant à la mise à jour logicielle des équipements. Le fournisseur de services ne peut effectuer la mise à jour logicielle de l'ONT dont l'abonné dépend.

### PRESENTATION DE L'INVENTION

L'invention propose de faire cohabiter l'ACS et l'AMS à distance des ONT en toute sécurité, en supervisant l'état des équipements ONTs chez les abonnés et en gérant la mise à jour logicielle de ces équipements ONTs.

A cet effet, l'invention propose un procédé de mise à jour logicielle d'un équipement d'un réseau fibre optique jusqu'à la maison, le réseau fibre optique jusqu'à la maison comprenant au moins un équipement de terminaison optique connecté à un boitier d'accès à Internet par l'intermédiaire d'une passerelle, le réseau fibre optique jusqu'à la maison comprenant un serveur de configuration adapté pour réaliser une mise à jour logicielle de la passerelle et du boitier d'accès à Internet selon le protocole TR-069, le procédé étant **caractérisé en ce que** le serveur de configuration réalise la mise à jour logicielle de l'équipement de terminaison optique selon le protocole TR-069.

L'invention est avantageusement complétée par les caractéristiques suivantes, prises seules ou en une quelconque de leur combinaison techniquement possible :
- le réseau fibre optique jusqu'à la maison comprend un équipement optique central connecté au réseau Internet d'une part et à au moins une terminaison optique d'autre part ainsi qu'un serveur d'administration du réseau, le procédé comprenant une étape selon laquelle le serveur d'administration du réseau réalise une mise à jour logicielle de l'équipement de terminaison optique selon le protocole OMCI via l'équipement optique central.
- la mise à jour logicielle de l'équipement de terminaison optique est identifiée par un numéro de version constitué de deux champs, le premier champ étant un identifiant de version reconnu par le serveur d'administration du réseau et le second champ étant un identifiant de version reconnu par le serveur de configuration, et dans lequel la mise à jour logicielle de l'équipement de terminaison optique, comprend les étapes selon lesquelles :
   ○ le serveur d'administration du réseau AMS transmet à l'équipement de terminaison optique une version logicielle identifiée par un identifiant correspondant au premier champ du numéro de version ; ou
   ○ le serveur de configuration transmet à l'équipement de terminaison optique une version logicielle identifiée par un identifiant correspondant aux deux champs du numéro de version.
- il comprend, si la mise à jour logicielle de l'équipement de terminaison optique est effectuée par le serveur d'administration du réseau, une étape selon laquelle, l'équipement de terminaison optique transmet au serveur de configuration le premier champ de l'identifiant de version correspondant.
- l'équipement de terminaison optique comprenant une mémoire, la mise à jour logicielle de l'équipement de terminaison optique, comprend les étapes selon lesquelles, l'équipement de terminaison optique :
   ○ reçoit une version logicielle différente de la version logicielle chargée ;
   ○ charge ladite version différente de la version logicielle chargée dans un premier espace mémoire de la mémoire de l'équipement de terminaison optique ;
   ○ déplace la version logicielle précédente dans un second espace mémoire de la mémoire de l'équipement de terminaison optique.
- l'équipement de terminaison optique comprenant une mémoire, la mise à jour logicielle de l'équipement de terminaison optique, comprend les étapes selon lesquelles, l'équipement de terminaison optique :
   ○ reçoit du serveur de configuration une version logicielle différente de la version logicielle chargée ;
   ○ charge ladite version différente de la version logicielle chargée dans un premier espace mémoire accessible uniquement par le serveur de configuration de la mémoire de l'équipement de terminaison optique ;
   ○ déplace la version logicielle précédente dans un second espace mémoire de la mémoire de l'équipement de terminaison optique.
- l'équipement de terminaison optique comprenant une mémoire, la mise à jour logicielle de l'équipement de terminaison optique, comprend les étapes selon lesquelles, l'équipement de terminaison optique :
   ○ reçoit du serveur d'administration du réseau une version logicielle différente de la version logicielle chargée ;
   ○ charge la version ladite version différente de la version logicielle chargée dans un troisième espace mémoire accessible uniquement par le serveur d'administration du réseau de la mémoire de l'équipement de terminaison optique;
   ○ déplace la version logicielle précédente dans un quatrième espace mémoire de la mémoire de l'équipement de terminaison optique.

L'invention concerne également un réseau fibre optique jusqu'à la maison comprenant au moins un équipement de terminaison optique connecté à un boitier d'accès à Internet par l'intermédiaire d'une passerelle, le réseau fibre optique jusqu'à la maison comprenant au moins un serveur de configuration adapté pour mettre à jour une version logicielle chargée dans la passerelle et le boitier d'accès à Internet selon le protocole TR-069, le réseau comprenant des équipements configurés pour mettre à jour une version logicielle chargée dans un équipement de terminaison optique selon un procédé tel que défini par l'une quelconque des revendications précédentes.

L'invention présente de nombreux avantages.

L'invention permet de décorréler les mises à jour entre les équipements OLTs et les équipements ONTs d'un réseau FTTH. Cette souplesse est avantageuse en environnement multi vendeurs : les évolutions logicielles des équipements OLTs et des équipements ONTs n'ont pas à être coordonnées.

En outre, le fait de prévoir la mise à jour logicielle d'un équipement ONT en TR-069 via le serveur ACS permet de sélectionner une population réduite d'abonnés (et donc d'équipements ONTs), sélection qui est difficile à implémenter dans le cas d'une mise à jour logicielle d'un équipement ONT en OMCI via le serveur AMS.

La mise à jour de l'équipement ONT possible par le serveur ACS ou par le serveur AMS (exemple si la mise à jour par le serveur ACS n'est pas possible) apporte plus de sécurité quant à la mise à jour : celle-ci est possible selon deux manières.

En outre, il est possible de mettre à jour tous les équipements chez l'abonné par un seul et même protocole et applicatif.

En outre, le procédé de l'invention peut être adapté sur la plupart des équipements ONT actuels sans modification matérielle.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

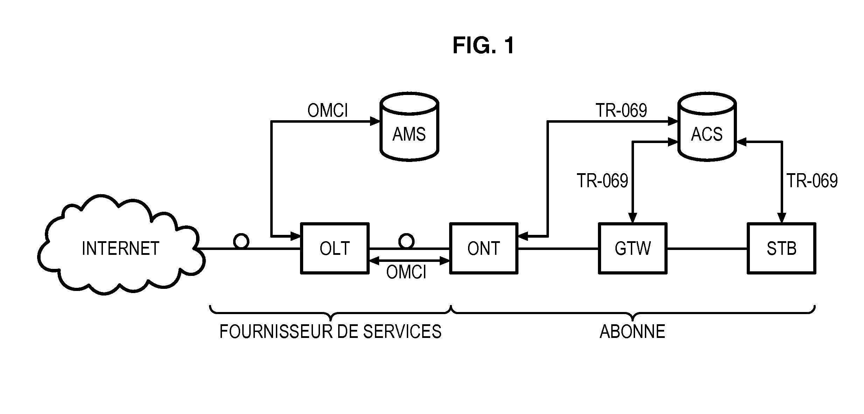

- la figure 1 illustre un réseau FTTH conforme à un mode de réalisation de l'invention ;
- la figure 2 illustre un procédé de mise à jour conforme à un premier mode de réalisation de l'invention ;
- la figure 3 illustre un procédé de mise à jour conforme à un second mode de réalisation de l'invention.

### DESCRIPTION DETAILLEE DE L'INVENTION

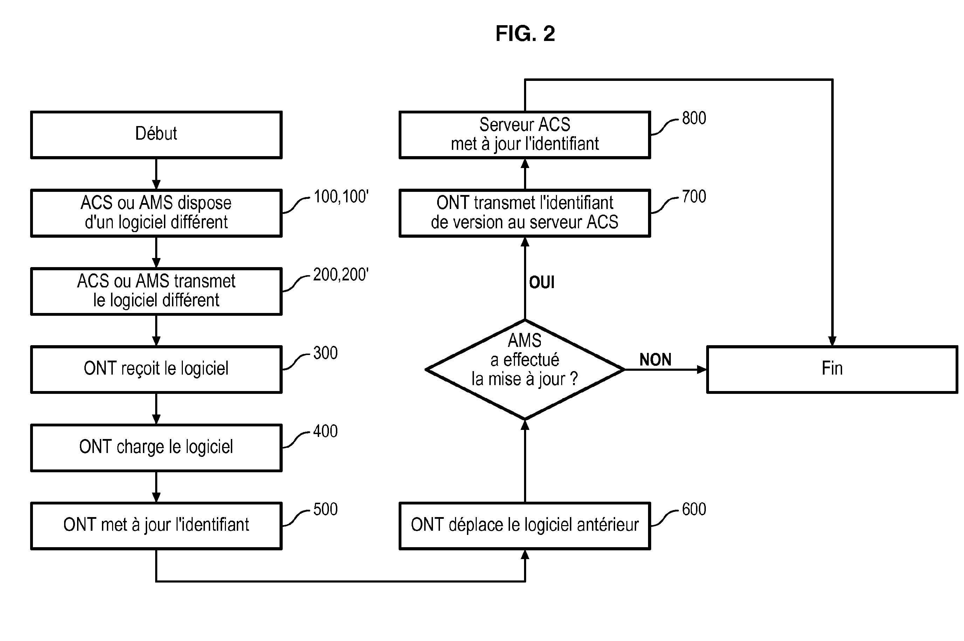

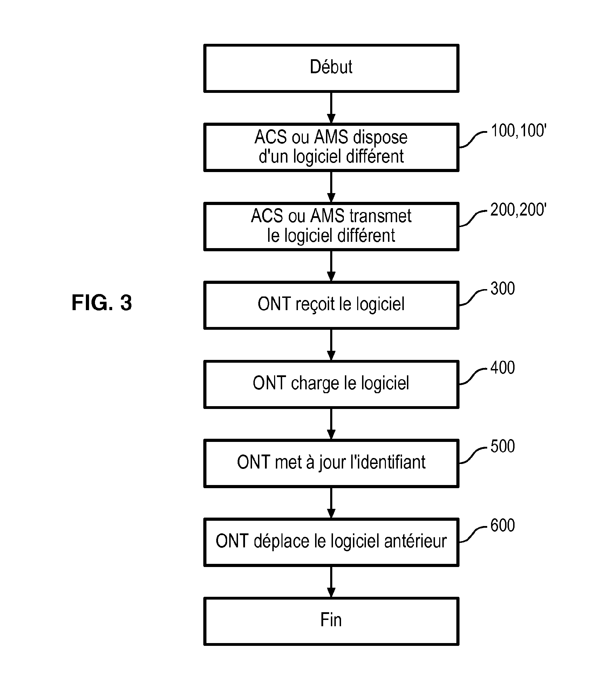

En relation avec les figures 2 et 3, un serveur ACS ou un serveur AMS d'un réseau FTTH dispose d'une version logicielle à charger dans un équipement ONT.

La version logicielle chargée dans l'équipement ONT peut être mise à jour soit par le serveur ACS (directement avec TR-069/IP) soit par le serveur AMS (par l'intermédiaire d'OMCI via l'OLT). Dans le premier cas, la version logicielle à charger sera poussée par le serveur ACS vers l'équipement ONT selon le protocole TR-069. Dans le second cas, la version logicielle à charger sera poussée par l'équipement OLT vers l'équipement ONT selon le protocole OMCI.

De manière préférée, la mise à jour logicielle par l'intermédiaire du serveur ACS sera mise en oeuvre, tandis que la mise à jour logicielle par l'intermédiaire du serveur AMS ne sera utilisée qu'en solution de repli si la mise à jour logicielle par l'intermédiaire du serveur ACS ne fonctionne pas.

Comme déjà mentionné en introduction, le serveur ACS communique selon le protocole TR-069 tandis que le serveur AMS communique selon le protocole OMCI. En outre, le serveur ACS permet de réaliser la mise à jour logicielle de la passerelle GTW et du boitier d'accès à Internet STB selon le protocole TR-069.

Dans un procédé de mise à jour conforme à l'invention, le serveur ACS va mettre à jour 100, 100' la version logicielle chargée dans l'équipement ONT selon le protocole TR-069.

Chaque serveur ACS, AMS identifie la ou les version(s) logicielle(s) à charger ou bien chargée(s) selon une nomenclature qui lui est propre.

A cet effet, chaque serveur comprend une base de données dans laquelle sont stockées les versions logicielles chargées dans les équipements du réseau FTTH.

A titre d'exemple, les versions reconnues par le serveur ACS sont des suites de quatre numéros (1.5.29.01, 1.5.23.1369, etc.) tandis que les versions reconnues par le serveur AMS sont une lettre (A, B, C, etc.).

### Premier mode de réalisation

Selon un premier mode de réalisation préféré, l'équipement ONT comprend une mémoire dans laquelle un premier espace mémoire est réservé à la version logicielle courante chargée et un second espace mémoire réservé pour stocker une version logicielle antérieure. La version logicielle stockée dans le second espace mémoire est prévue à des fins de restauration en cas d'incident au cours d'une mise à jour.

Afin que la mise à jour logicielle de l'équipement ONT soit possible soit par le serveur ACS en TR-069 soit par le serveur AMS en OMCI, la version logicielle chargée dans l'équipement ONT est identifiée par un identifiant de version, constitué de deux champs, le premier champ étant un identifiant de version reconnu par un serveur AMS et le second champ un identifiant de version reconnu par le serveur ACS.

De manière préférée, seul l'ACS a la connaissance de cet identifiant. En effet, le serveur AMS lui n'a la connaissance que du premier champ.

On distingue deux cas de figure selon que la mise à jour logicielle est initiée par le serveur ACS ou bien par le serveur AMS.

Soit le serveur ACS disposant d'une version logicielle à charger 100 dans l'équipement ONT. L'identifiant de cette version à charger est 'A.1.5.29.01' (le premier champ est 'A', le second est '1.5.29.01') et l'identifiant de la version chargée dans l'équipement ONT a pour identifiant 'A.1.5.23.1369'.

Le serveur ACS transmet 200 donc à l'équipement ONT la version logicielle 'A.1.5.29.01' ainsi que l'identifiant selon le protocole TR-069.

Une fois que l'équipement ONT a reçu 300 la version logicielle `A.1.5.29.01' et l'identifiant, l'équipement ONT charge 400 dans le premier espace mémoire la version logicielle 'A.1.5.29.01' et déplace 500 la version logicielle antérieure 'A.1.5.23.1369' dans le second espace mémoire.

Soit maintenant le serveur AMS disposant 100' d'une version logicielle à charger dans l'équipement ONT. L'identifiant de cette version logicielle à charger est 'B' et l'identifiant de la version logicielle chargée dans l'équipement ONT a pour identifiant 'A.1.5.23.1369'. Le serveur AMS transmet 200' à l'équipement ONT la version logicielle 'B' et l'identifiant selon le protocole OMCI. L'équipement ONT charge 400 dans le premier espace mémoire la version logicielle 'B' et déplace 600 la version logicielle antérieure 'A.1.5.23.1369' dans le second espace mémoire. L'équipement ONT met également à jour 500 l'identifiant de la version logicielle chargée.

En outre, s'agissant du serveur AMS, l'ONT transmet 700 au serveur ACS l'identifiant 'B' pour qu'il mette à jour 800 la base de données dans laquelle sont stockées les versions logicielles des équipements.

La structure à deux champs de l'identifiant permet de faire croire au serveur AMS que la version logicielle chargée dans l'équipement ONT est en accord avec la version logicielle qu'il pense être chargée dans l'équipement ONT. Par ailleurs, l'utilisation des deux champs permet d'éviter que l'équipement OLT ne déclenche une alarme si la dernière mise à jour a été initiée par le serveur ACS, ou encore qu'il ne force une mise à jour logicielle selon la dernière version dont il dispose. En effet, le serveur AMS n'aurait pas d'identifiant de version logicielle en accord avec sa nomenclature.

### Second mode de réalisation

Selon un seconde mode de réalisation de l'invention, l'équipement ONT comprend une mémoire dans laquelle des espaces mémoire sont réservés pour être exclusivement accessibles soit par le serveur ACS selon le protocole TR-069, soit par le serveur AMS selon le protocole OMCI avec les identifiants de version logicielle ad hoc.

La mémoire de l'équipement ONT comprend donc quatre espaces mémoires :
- un premier espace mémoire réservé à la version logicielle courante chargée accessible par le serveur ACS selon le protocole TR-069 ;
- un second espace mémoire réservé à la version logicielle antérieure accessible par le serveur ACS selon le protocole TR-069 ;
- un troisième espace mémoire réservé à la version logicielle courante accessible par le serveur AMS selon le protocole OMCI ;
- un quatrième espace mémoire réservé à la version logicielle antérieure accessible par le serveur AMS selon le protocole OMCI.

Dans ce mode de réalisation, en fonction du serveur qui initie la mise à jour logicielle seuls deux emplacements mémoires sur quatre dans l'équipement ONT seront utilisés.

Comme pour le 1^{er} mode de réalisation, on distingue deux cas : la mise à jour logicielle est initiée par le serveur ACS ou bien par le serveur AMS.

Soit le serveur ACS disposant d'une version logicielle à charger 100 dans l'équipement ONT. L'identifiant de cette version à charger est '1.5.29.01' et l'identifiant de la version chargée dans l'équipement ONT est '1.5.23.1369'.

Le serveur ACS transmet 200 donc à l'équipement ONT la version logicielle '1.5.29.01' ainsi que l'identifiant selon le protocole TR-069.

Une fois que l'équipement ONT a reçu 300 la version logicielle '1.5.29.01' et l'identifiant, l'équipement ONT charge 400 dans le premier espace mémoire la version logicielle '1.5.29.01' et déplace 500 la version logicielle antérieure '1.5.23.1369' dans le second espace mémoire.

Soit maintenant le serveur AMS disposant 100' d'une version logicielle à charger dans l'équipement ONT. L'identifiant de cette version logicielle à charger est 'B' et l'identifiant de la version logicielle chargée dans l'équipement ONT est 'A'.

Le serveur AMS transmet 200' à l'équipement ONT la version logicielle 'B' et l'identifiant selon le protocole OMCI. L'équipement ONT charge 400 dans le troisième espace mémoire la version logicielle 'B' et déplace 600 la version logicielle antérieure 'A' dans le quatrième espace mémoire. L'équipement ONT met également à jour 500 l'identifiant de la version logicielle chargée.

De manière commune aux deux modes de réalisation, le chargement 400 de la version logicielle correspond à une activation de la version logicielle dans l'équipement.

Si la mise à jour logicielle est initiée par le serveur ACS, l'activation comprend un redémarrage (en anglais, « *reboot* ») de l'équipement ONT. Par sécurité, si à l'issu de trois redémarrages l'activation est un échec, l'équipement ONT va charger la version logicielle précédente.

Si la mise à jour logicielle est initiée par le serveur AMS, l'activation comprend un redémarrage de l'équipement ONT. A l'issu de redémarrage de l'équipement ONT, l'équipement OLT lance un compteur d'une certaine durée. L'équipement ONT dispose de la durée du compteur pour transmettre à l'équipement OLT que la mise à jour logicielle a fonctionné. En cas d'échec, l'équipement ONT va charger la version logicielle précédente.

Comme on l'aura compris, la mise à jour logicielle est possible via le serveur ACS selon le protocole TR-069 ou bien par le serveur AMS selon le protocole OMCI.

L'invention ci-dessus décrite n'est pas limitée au procédé mais s'étend également à un réseau FTTH dont les équipements sont configurés pour mettre en oeuvre le procédé de l'invention.

## Revendications

1. Procédé de mise à jour logicielle d'un équipement d'un réseau fibre optique jusqu'à la maison (FTTH), le réseau fibre optique jusqu'à la maison (FTTH) comprenant au moins un équipement de terminaison optique (ONT) connecté à un boitier d'accès à Internet (STB) par l'intermédiaire d'une passerelle (GTW), le réseau fibre optique jusqu'à la maison (FTTH) comprenant un serveur de configuration (ACS) adapté pour réaliser une mise à jour logicielle de la passerelle (GTW) et du boitier d'accès à Internet (STB) selon le protocole TR-069, le procédé étant **caractérisé en ce que** le serveur de configuration (ACS) réalise la mise à jour logicielle (100) de l'équipement de terminaison optique (ONT) selon le protocole TR-069, la mise à jour logicielle de l'équipement de terminaison optique (ONT) étant identifiée par un numéro de version constitué de deux champs, le premier champ étant un identifiant de version reconnu par le serveur d'administration du réseau (AMS) et le second champ étant un identifiant de version reconnu par le serveur de configuration (ACS), et dans lequel la mise à jour logicielle de l'équipement de terminaison optique (ONT), comprend les étapes selon lesquelles:
- le serveur d'administration du réseau AMS transmet (200, 200') à l'équipement de terminaison optique (ONT) une version logicielle identifiée par un identifiant correspondant au premier champ du numéro de version ; ou
- le serveur de configuration (ACS) transmet à l'équipement de terminaison optique (ONT) une version logicielle identifiée par un identifiant correspondant aux deux champs du numéro de version.

2. Procédé selon la revendication 1, dans lequel le réseau fibre optique jusqu'à la maison (FTTH) comprend un équipement optique central (OLT) connecté au réseau Internet d'une part et à au moins une terminaison optique (ONT) d'autre part, ainsi qu'un serveur d'administration du réseau (AMS), le procédé comprenant une étape selon laquelle le serveur d'administration du réseau (AMS) réalise une mise à jour (100') logicielle de l'équipement de terminaison optique (ONT) selon le protocole OMCI via l'équipement optique central (OLT).

3. Procédé selon la revendication précédente, comprenant, si la mise à jour logicielle de l'équipement de terminaison optique (ONT) est effectuée par le serveur d'administration du réseau (AMS), une étape selon laquelle, l'équipement de terminaison optique (ONT) transmet (700) au serveur de configuration (ACS) le premier champ de l'identifiant de version correspondant.

4. Procédé selon l'une des revendications précédentes, dans lequel l'équipement de terminaison optique (ONT) comprenant une mémoire, la mise à jour logicielle de l'équipement de terminaison optique (ONT), comprend les étapes selon lesquelles, l'équipement de terminaison optique (ONT) :
- reçoit (300) une version logicielle différente de la version logicielle chargée ;
- charge (400) ladite version différente de la version logicielle chargée dans un premier espace mémoire de la mémoire de l'équipement de terminaison optique (ONT) ;
- déplace (600) la version logicielle précédente dans un second espace mémoire de la mémoire de l'équipement de terminaison optique (ONT).

5. Procédé selon la revendication 1, dans lequel l'équipement de terminaison optique (ONT) comprenant une mémoire, la mise à jour logicielle de l'équipement de terminaison optique (ONT), comprend les étapes selon lesquelles, l'équipement de terminaison optique (ONT) :
- reçoit (300) du serveur de configuration (ACS) une version logicielle différente de la version logicielle chargée ;
- charge (400) ladite version différente de la version logicielle chargée dans un premier espace mémoire accessible uniquement par le serveur de configuration (ACS) de la mémoire de l'équipement de terminaison optique (ONT) ;
- déplace (600) la version logicielle précédente dans un second espace mémoire de la mémoire de l'équipement de terminaison optique (ONT).

6. Procédé selon la revendication 2, dans lequel l'équipement de terminaison optique (ONT) comprenant une mémoire, la mise à jour logicielle de l'équipement de terminaison optique (ONT), comprend les étapes selon lesquelles, l'équipement de terminaison optique (ONT) :
- reçoit (300) du serveur d'administration du réseau (AMS) une version logicielle différente de la version logicielle chargée ;
- charge (400) la version ladite version différente de la version logicielle chargée dans un troisième espace mémoire accessible uniquement par le serveur d'administration du réseau (AMS) de la mémoire de l'équipement de terminaison optique (ONT);
- déplace (600) la version logicielle précédente dans un quatrième espace mémoire de la mémoire de l'équipement de terminaison optique (ONT).

7. Procédé selon l'une des revendications 4 à 6, dans lequel la version différente de la version logicielle chargée est soit une version plus récente soit une version antérieure.

8. Réseau fibre optique jusqu'à la maison (FTTH) comprenant au moins un équipement de terminaison optique (ONT) connecté à un boitier d'accès à Internet (STB) par l'intermédiaire d'une passerelle (GTW), le réseau fibre optique jusqu'à la maison (FTTH) comprenant au moins un serveur de configuration (ACS) adapté pour mettre à jour une version logicielle chargée dans la passerelle (GTW) et le boitier d'accès à Internet (STB) selon le protocole TR-069, le réseau comprenant des équipements configurés pour mettre à jour une version logicielle chargée dans un équipement de terminaison optique (ONT) selon un procédé tel que défini par l'une quelconque des revendications précédentes.
